# EUROPEAN PATENT SPECIFICATION

(11) **EP 4 351 850 B1**
(45) Date of publication and mention of the grant of the patent: **02.07.2025**
(21) Application number: 22747905.2
(22) Date of filing: 08.07.2022
(51) Int. Cl.: B27B 5/10, B28D 1/04, E01C 23/09, B27B 9/02

(54) **SAW FOR CUTTING HARD MATERIAL**
SÄGE ZUM SCHNEIDEN VON HARTEM MATERIAL
SCIE DESTINÉE À COUPER UN MATÉRIAU DUR

(30) Priority: 14.09.2021 US 202163243913 P
(43) Date of publication of application: 17.04.2024
(73) Proprietor: Simex Engineering S.r.l., 40017 San Giovanni In Persiceto (BO) (IT)
(72) Inventor: Hilsgen, Troy, Kimball, MN 55353 (US)
(74) Representative: Crippa, Paolo Ernesto
(86) International application number: PCT/US2022/036522
(87) International publication number: WO 2023/043523

(56) References cited:
- EP-A2- 0 974 415
- US-A- 4 840 431
- US-A- 4 878 713
- US-A1- 2011 203 565
- US-B1- 6 203 112

## Description

### Technical Field

The present invention is related generally to equipment for cutting hard materials, and more particularly to a saw for cutting hard materials according to the preamble of claim 1.

### Summary

Document US 2011/203565 A1 discloses a saw, according to the preamble of claim 1, for cutting hard materials.

The present invention provides a saw, according to claim 1, for cutting a hard material, such as concrete, rock (e.g., granite and slate) and asphalt, among others. The saw includes a housing on which is mounted a motor, an arbor on which a saw blade can be attached, a shield, a cut-depth guide, a guide wheel and a mounting plate, where pressure applied through the mounting plate to the guide wheel helps to maintain a cut depth of the saw blade in the hard material, where the cut depth is determined by the position of the guide wheel relative the housing as will be discussed herein.

The housing of the saw includes a first side wall and a second side wall. The motor is mounted to the first side wall of the housing and the arbor is mounted to the second side wall of the housing. The motor includes a drive shaft. The arbor includes a first end and a second end opposite the first end. The first end of the arbor can receive a saw blade having a circumferential cutting edge and the second end of the arbor is coupled to the drive shaft of the motor, where the drive shaft of the motor turns the second end of the arbor to rotate the circumferential cutting edge of the saw blade. The arbor is in a fixed position relative to the housing of the saw. Besides its rotational motion the arbor cannot and does not change positions relative the housing.

The shield mounted to the housing includes a top wall that covers at least a portion of the first end of the arbor. The top wall has a first major surface space directly across from the first end of the arbor to receive the saw blade and a second major surface opposite the first major surface. The second major surface includes an elongate mark that aligns with the circumferential cutting edge of the saw blade when mounted on the first end of the arbor.

The cut-depth guide on the housing includes a depth post, a sleeve to receive the depth post and a latch mounted to the sleeve. The sleeve includes an interior surface that defines an opening that at least partially surrounds the depth post and through which the depth post can move relative the sleeve. The depth post has a first end, a second end opposite the first end along a longitudinal axis and has two or more of a surface that are each spaced at a predetermined interval from each other along the longitudinal axis. The latch has a first portion that releasably engages the surface of the depth post to fix the position of the depth post relative to the sleeve. The guide wheel extends from the first end of the depth post, where the guide wheel includes a peripheral surface that can contact the hard surface.

The mounting plate of the saw includes a first major surface and a second major surface opposite the first major surface. The first major surface has a cleat for releasably joining the saw to a machine that provides power to operate the motor of the saw. The first wall and the second wall of housing are coupled to the second major surface of the mounting plate, where the first side wall and the second side wall of housing extend in a common direction away from both the first major surface and the second major surface of the mounting plate. The alignment of the circumferential cutting edge of the saw blade will not change relative to the first major surface and the second major surface of the mounting plate. In operation, the mounting plate can transfer pressure from the machine to the guide wheel extending from the first end of the depth post to maintain a cut depth of the saw blade determined by the position of the depth post relative to the sleeve.

For the various embodiments, an example of the machine as used herein is a skid-steer loader, also known as a skid loader or a skidsteer. Other machines for use with the saw of the present disclosure are possible.

For the various embodiments, the arbor includes a longitudinal axis extending between the first end and the second end of the arbor, where the longitudinal axis cannot move relative to the housing of the saw. In other words, the arbor, while it can rotate under the power of the motor, is otherwise in a fixed position and always remains in a fixed position relative the housing. For the various embodiments, a universal joint can be used to connect the second end of the arbor to the drive shaft of the motor . An example of the universal joint is a jaw type coupler (e.g., a Lovejoy^{®} L Type Standard Jaw Coupling) that connects the second end of the arbor to the drive shaft of the motor. The arbor can further include one or more of a bearing mount that attaches the arbor to the housing.

The saw of the present disclosure can further include only one of a hydraulic motor, which is used to turn the arbor. The only one of the hydraulic motor is mounted to the first side wall of the housing, where the hydraulic motor driven by pressure from hydraulic fluid provided by an auxiliary hydraulic power supply of the machine. For the various embodiments, all of the power provided by the auxiliary hydraulic power supply can be used to operate the hydraulic motor. For the various embodiments, the saw can further include an inline check-valve hydraulically coupled to the hydraulic motor.

The housing of the saw can further include a top wall connected to the first side wall and the second side wall. The top wall includes a first major surface and a second major surface opposite the first major surface, and a surface extending between the first major surface and the second major surface to define an opening. For the various embodiments, the sleeve of the cut-depth guide extends in a common direction away from both the first major surface and the second major surface of the top wall, where the opening through the top wall aligns with the opening in the sleeve of the cut-depth guide to allow the depth post to move through the openings relative the sleeve. For the various embodiments, the latch includes a pin having a first end and a second end spaced longitudinally from the first end, where the pin defines the first portion of the latch that releasably engages the surface of the depth post. The sleeve of the cut-depth guide can include a first pin guide wall having a first surface defining a first opening to the interior surface of the sleeve and a second pin guide wall having a second surface defining a second opening to the interior surface of the sleeve. The first opening and the second opening to the interior surface of the sleeve are concentrically aligned, where the first pin guide wall and the second pin guide wall releasably receive at least the first portion defined by the pin.

For the various embodiments, the depth post can be a tube having a square cross-sectional shape that includes a first wall and a second wall opposite the first wall. For the present embodiment, the first wall includes two or more of the surfaces to define a first series of holes spaced at the predetermined interval from each other along the longitudinal axis and the second wall includes two or more of the surfaces to define a second series of holes spaced at the predetermined interval from each other along the longitudinal axis and wherein the first series of holes and the second series of holes form concentrically aligned pairs of holes that can receive the pin.

For the various embodiments, the latch can further include a yoke having a front latch wall, a first side wall and a second side wall opposite the first side wall. The front latch wall includes a first major surface and a second major surface opposite the first major surface. The front wall joins the first side wall and the second side wall and where both the first side wall and the second side wall extend in a common direction from the sleeve of the cut-depth guide. The front latch wall further including a surface extending between the first major surface and the second major surface to define an opening that concentrically aligns with the first opening of the first pin guide wall and the second opening of the second pin guide wall. For the various embodiments, the pin can extend through the opening in the front latch wall, the first opening in the first pin guide wall and at least partially through the second opening in the second pin guide wall to position the first end of the pin distal to the opening in the front latch wall and the first opening in the first pin guide wall. For the various embodiments, a handle can be attached to the pin, where the handle can be positioned proximal to the first major surface of the front latch wall. The latch can further include a spring positioned between the second surface of the front latch wall and the first pin guide wall, where a first portion of the spring is joined to the pin such that a force applied to the handle to move the first end of the pin further away from both the first major surface and the second major surface of the front latch wall compresses the spring.

The housing can further include a front housing wall extending between the first side wall and the second side wall of the housing define a socket to receive the guide wheel. For the various embodiments, the two or more of the surface of the depth post can include a terminal surface to receive the first portion of the latch to fix the guide wheel at least partially within the housing so that only a portion of the peripheral surface that contacts the hard material when the mounting plate transfers pressure from the machine to the guide wheel extends from the socket to place the saw blade at a full depth cutting position for the saw. In an additional embodiment, the front housing wall includes a first major planar surface and a second major planar surface opposite the first major planar surface, where the first major planar surface and the second major planar surface are approximately perpendicular to a planar surface of the hard material being cut by the saw when the saw blade is at the full depth cutting position.

For the various embodiments, the first side wall and the second side wall of the housing can each have the shape of a convex polygon having five peripheral straight edges that define five corners. For the five peripheral straight edges, a first edge is parallel with both the first major surface and the second major surface of the mounting plate; a second edge extends from both the first major surface and the second major surface of the mounting plate to form a first corner having an interior angle of approximately 83 degrees with the first edge; a third edge extends from both the first major surface and the second major surface of the mounting plate to form a second corner having an interior angle of approximately 81 degrees with the first edge; a fourth edge extends from the third edge to form a third corner having an interior angle of approximately 172 degrees with the third edge; and a fifth edge extends from the fourth edge to form a fourth corner having an interior angle of approximately 90 degrees with the fourth edge, and extends from the third edge to form a fifth corner having an interior angle of approximately 114 degrees with the third edge. For the various embodiments, when the saw blade is at the full depth cutting position the fourth edge of each of the first side wall and the second side wall of the housing is approximately parallel with the planar surface of the hard material.

For the various embodiments, only a portion of the shield mounted to the housing extends distally from both the first major planar surface and the second major planar surface of the front housing wall. In additional embodiments, the shield can further include a first portion and second portion joined to the first portion with a hinge, where the first portion of the shield is mounted to the housing and the second portion of the shield can pivot relative the first portion of the shield and the housing around the hinge.

For the various embodiments, the saw can further include a tank mounted to the mounting plate to supply fluid to the saw blade. The tank can include a tank inlet to receive a fluid and a tank outlet through which the fluid can flow. The saw further includes a pump having a pump inlet fluidly coupled to the tank outlet and a pump outlet for pumping the fluid from the tank. A valve having a valve inlet is fluidly coupled to the pump outlet and a value outlet, where the value can adjust a flow rate of the fluid from the pump. The saw further includes an outlet nozzle fluidly coupled to the value outlet, where the outlet nozzle is located at a position adjacent the shield to supply the fluid to the saw blade. Water is an example of the fluid to use with the tank and saw of the present disclosure.

### Brief Description of the Figures

Fig. 1 is a perspective front view of the saw for cutting hard materials according to the present disclosure.
Fig. 2 is a perspective view of the saw for cutting hard materials according to the present disclosure, where a component of the saw is in an exploded view.
Fig. 3 is a perspective view of the saw for cutting hard materials according to the present disclosure.
Fig. 4 is a perspective view of the saw for cutting hard materials according to the present disclosure, where several components of the saw are in an exploded view.

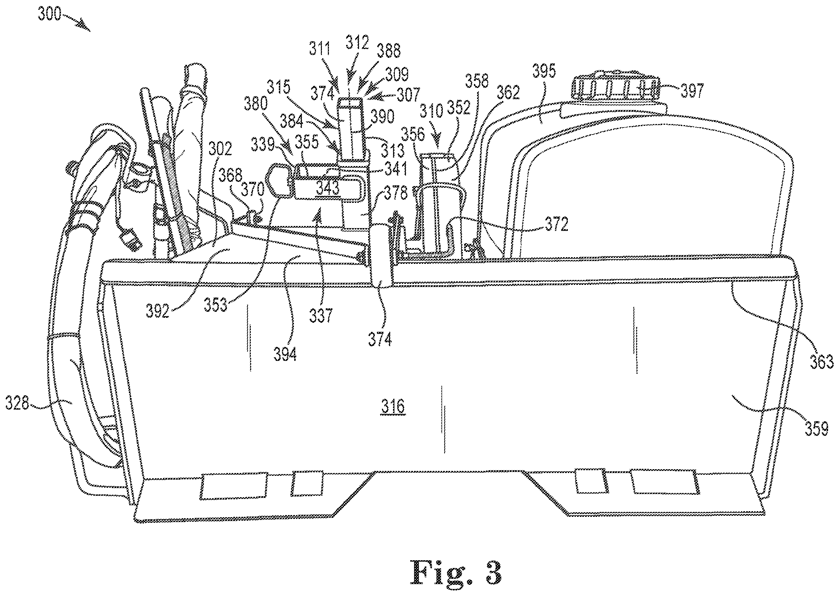

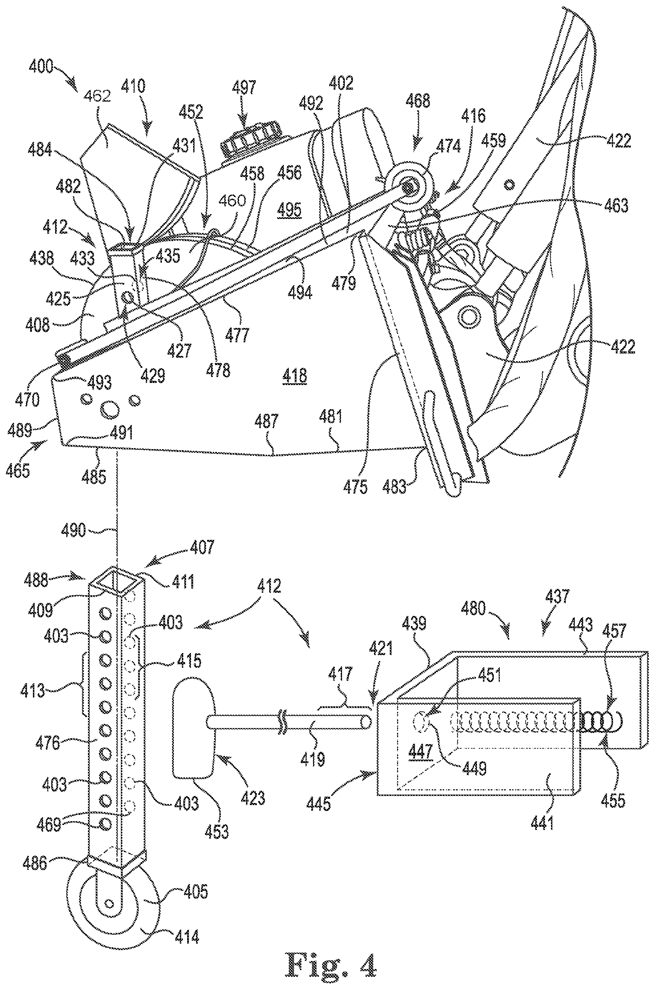

The figures herein follow a numbering convention in which the first digit or digits correspond to the drawing figure number and the remaining two digits identify an element in the drawing. Similar elements between different figures may be identified by the use of similar digits. For example, 302 may reference element "02" in Fig. 3, and a similar element may be referenced as 402 in Fig. 4. It is emphasized that the purpose of the figures is to illustrate, and the figures are not intended to be limiting in any way. The figures herein may not be to scale and relationships of elements in the figures may be exaggerated. The figures are employed to illustrate conceptual structures and methods herein described.

### Detailed Description of Disclosure

The present disclosure provides for a saw for cutting a hard material, such as concrete, rock (e.g., granite and slate) and asphalt, among others. As discussed herein, the saw of the present disclosure has only a single hydraulic circuit, which is used to drive an arbor on which a saw blade is mounted. As discussed herein, the arbor shaft is mounted to a housing in a fixed position so that the saw blade, besides its rotational movement when driven by the single hydraulic circuit, does not move relative the housing. In other words, apart from the rotation of the saw blade, there is no movement (e.g., vertical, lateral, or horizontal) of the saw blade relative the housing. In operation, the only vertical, lateral and/or horizontal movement of the saw blade is from the movement of the machine on which the saw is mounted.

The arbor of the saw is also mounted in such a way to position the saw blade in the approximate lateral and longitudinal center of the housing, which allows the operator of the saw when seated in the machine to have a direct line of sight on the cut being created by the saw blade. To aid this line of sight, a shield mounted over the saw blade includes an elongate mark that aligns with the circumferential cutting edge of the saw blade. In this way, the operator of the saw can line the cutting edge of the saw blade with the desired cut line in a fast and efficient manner.

The saw of the present disclosure further includes a cut-depth guide on the housing. As discussed herein, the cut-depth guide includes a guide wheel that can be used to achieve a predefined cut depth in the hard material. For the various embodiments, the cut depth is determined by the position of the guide wheel relative the housing as will be discussed herein. The use of the guide wheel also allows the machine on which the saw is mounted to apply pressure to the guide wheel to help maintain the cut depth of the saw blade. This can be of particular importance when a cut is being made by the saw in a hard material that is directly over and/or in very close proximity to one or more structures that must not be cut, such as electrical power lines, sewer/waste lines, water lines and/or gas lines (e.g., natural gas lines), among others. The pressure applied to the guide wheel also helps to prevent the saw blade from "walking out" of the cut, which helps to ensure the cut depth is maintained for the entire length of the cut.

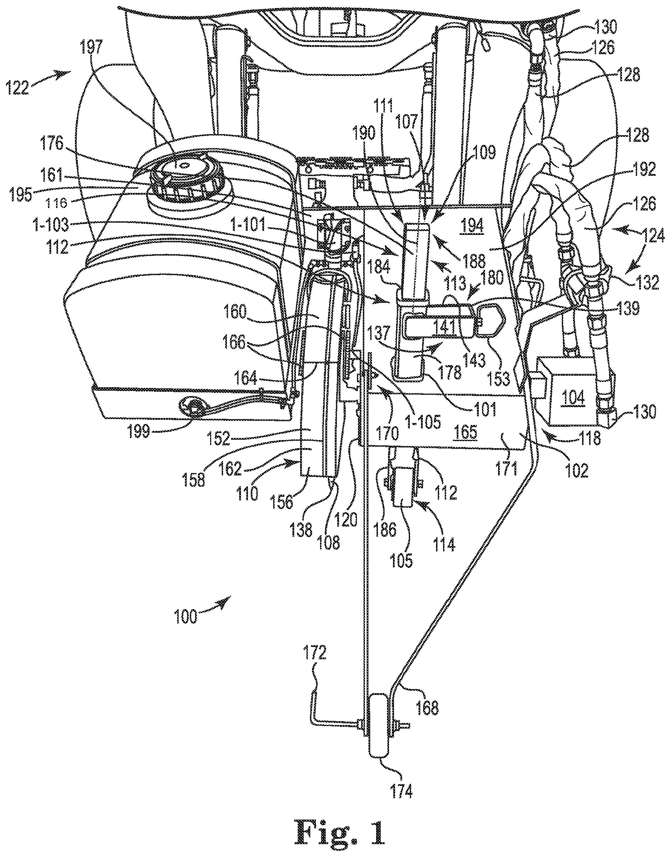

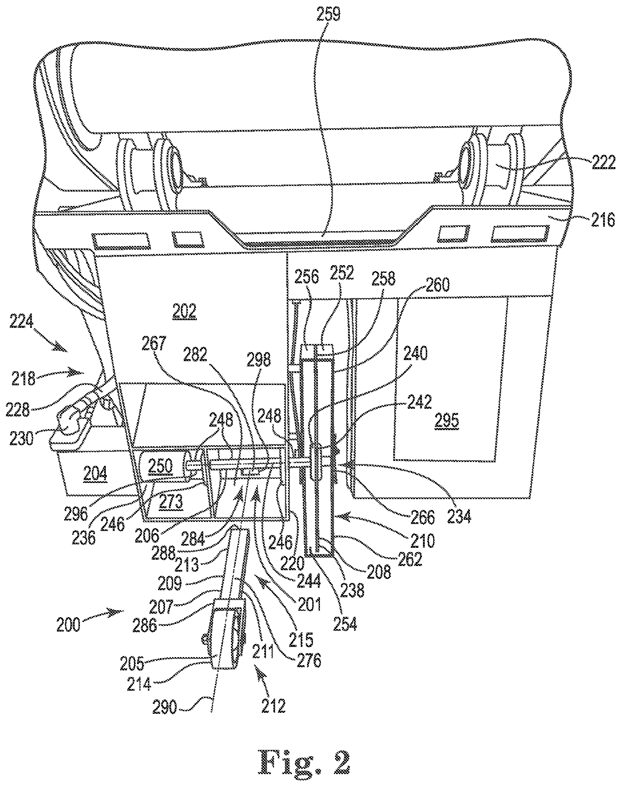

The above advantages and others are discussed in reference to the figures of the present disclosure. Referring now to Figs. 1-4, there is shown an embodiment of the saw 100/200/300/400 according to the present disclosure. The saw 100/200/300/400 includes a housing 102/202/302/402 on which is mounted a motor 104/204, an arbor 206 on which a saw blade 108/208/408 is releasably attached, a shield 110/210/310/410, a cut-depth guide 112/212/312/412, a guide wheel 114/214/414 and a mounting plate 116/216/316/416. For the various embodiments, the cut-depth guide 112/212/312/412 and the guide wheel 114/214/414 help to accurately control the depth of the cut, as discussed herein. In addition, as will be recognized, the cut-depth guide 112/212/312/412 of the present disclosure can be quickly and easily adjusted to predetermined cut depths without the need for special tools or equipment. This ability to quickly and easily adjusted to predetermined cut depths is important when cutting over utilities, as discussed above, in addition to helping to conserve the life of the diamond saw blade used on the saw 100/200/300/400 of the present disclosure. In addition, the cut-depth guide 112/212/312/412 can allow the saw 100/200/300/400 with an attached saw blade to be transported either mounted to a machine (e.g., a steer-skid loader) or not mounted to a machine, where the guide wheel 114/214/414 can be used to hold the saw blade away from the surface on which the saw 100/200/300/400 is being transported.

For the various embodiments, the housing 102/202/302/402 of the saw includes a first side wall 118/218/418 and a second side wall 120/220. The motor 104/204 is mounted to the first side wall 118/218/418 of the housing 102/202/302/402. For the various embodiments, the motor 104/204 includes a drive shaft, which rotates from power provided by a hydraulic circuit, as discussed herein. Mounting the motor 104/204 to the first side wall 118/218/418 of the housing 102/202/302/402 can be accomplished with one or more fasteners, where the fasteners can include bolts with associated nuts that are used to mount the motor 104/204 to the first side wall 118/218/418 of the housing 102/202/302/402. The use of other fasteners is also possible. Fig. 4 provides an illustration of the openings in the first side wall 118/218/418 by which the motor 104/204 is mounted to the housing 102/202/302/402.

For the various embodiments, the motor 104/204 mounted to the first side wall 118/218/418 of the housing 102/202/302/402 can be any number of motor types that can receive power to rotate its drive shaft from the machine 122/222/422 on which the saw 100/200/300/400 of the present disclosure is mounted. Preferably, the motor 104/204 is a hydraulic motor that converts hydraulic pressure and flow in a closed hydraulic circuit, supplied by the machine 122/222/422 on which the saw 100/200/300/400 is mounted, into angular displacement to rotate the drive shaft, the arbor 206 coupled thereto and the saw blade 108/208/408 as discussed herein. Examples of hydraulic motors useful for the present disclosure include a vane motor, a piston motor such as a radial piston motor or a bent axis piston motor, an orbital motor, and a gear motor, as are all known in the art. Preferably, the motor 104/204 is a fixed displacement gear motor, as is known in the art. The use of the fixed displacement gear motor allows for a fixed rotation per minute (rpm) output for the motor 104/204. Alternatively, a variable displacement motor could be used to allow for different rpm ranges for the motor 104/204. As noted, other motors could also be used, such as an electrical motor.

As illustrated, the motor 104/204 forms a portion of a single hydraulic circuit 124/224, which includes a first hydraulic hose 126 and a second hydraulic hose 128/228/328 that supply the pressurized hydraulic fluid to rotate the drive shaft of the motor 104/204. The pressurized hydraulic fluid can be supplied by an auxiliary hydraulic power supply from the machine 122/222/422 on which the saw 100/200/300/400 is releasably mounted. The auxiliary hydraulic power supply from the machine 122/222/422 can be supplied, for example, from an axial-piston pump that generates pressurized hydraulic fluid that can be used to operate the motor 104/204. As illustrated, the first hydraulic hose 126 and the second hydraulic hose 128/228/328 are releasably coupled to the motor 104/204 and the auxiliary hydraulic power supply from the machine 122/222/422 using hydraulic fittings 130/230 on the hoses 126 and 128/228/328, the machine 122/222/422 and the motor 104/204, as are known in the art.

As discussed herein, the saw 100/200/300/400 includes only the single hydraulic circuit 124/224, which is used to drive the arbor 206 on which a saw blade is mounted. Besides the single hydraulic circuit 124/224, the saw 100/200/300/400 of the present disclosure does not include any other hydraulic motors and/or hydraulic circuits that are seen, for example, in other saws for purposes other than operating the arbor of the saw. As a result of the saw 100/200/300/400 using only the single hydraulic circuit 124/224 to drive the arbor 206 a greater percentage of the power from the auxiliary hydraulic power supply can be delivered to the arbor 206 to turn the saw blade 108/208/408. In other words, the arbor 206 can receive all the power that can possibly be generated by the auxiliary hydraulic power supply (e.g., one hundred percent) because no other hydraulic circuits besides the single hydraulic circuit 124/224 are coupled to the auxiliary hydraulic power supply of the machine 122/222/422.

Another advantage of the present disclosure is that by using only the single hydraulic circuit 124/224 with the saw 100/200/300/400 the need for a 14-pin and/or a 7-pin connector to operate other hydraulic circuits on the auxiliary hydraulic power supply is no longer required. Another advantage of the saw 100/200/300/400 of the present disclosure is that it does not need a designated machine for its operation. This means that the saw 100/200/300/400 of the present disclosure can be used with a wider variety of machines and brands of machines. For the various embodiments, an example of the machine 122/222/422 as used herein is a skid-steer loader, also known as a skid loader or a skidsteer. Brands of skid-steer loaders can include Bobcat^{®}, CASE^{®}, New Holland^{®}, Mustang^{®}, Volvo^{®}, Caterpillar^{®}, Kubota^{®}, Wacker^{®} and John Deere^{®}, among others. Other machines, besides skid-steer loaders, for use with the saw 100/200/300/400 of the present disclosure are possible.

The single hydraulic circuit 124/224 can also incorporate additional components that allow for a variety of features. For example, the single hydraulic circuit 124/224 can further include an in-line check valve 132, which allows for the saw blade 108/208/408 to come to a stop in a rapid fashion once the power from the auxiliary hydraulic power supply is stopped. The single hydraulic circuit 124/224 can further include, if desired, one or more hydraulic cushioning valves, which can help to absorb hydraulic surges at the start-up of the motor 104/204.

As illustrated, the arbor 206 is mounted to the second side wall 120/220 of the housing 102/202/302/402. The arbor 206 includes a first end 234 and a second end 236 opposite the first end 234. The first end 234 of the arbor 206 can receive the saw blade 108/208/408 having a circumferential cutting edge 138/238 and the second end 236 of the arbor 206 is coupled to the drive shaft of the motor 104/204. The motor 104/204 can be used to turn the second end 236 of the arbor 206 to rotate the circumferential cutting edge 138/238 of the saw blade 108/208/408. The arbor 206 can include a shank that receives the arbor hole of the saw blade 108/208/408, where shank includes a stop collar 240 to position the saw blade 108/208/408 in a preterminal position on the arbor 206 and a mounting collar 242 that secures the saw blade 108/208/408 to the arbor 206. The mounting collar 242 can be a threaded nut that is received by a threaded portion of the shank, where the threaded nut can be tightened to hold the saw blade 108/208/408 on the arbor 206.

For the various embodiments, the arbor 206 includes a longitudinal axis 244 extending between the first end 234 and the second end 236 of the arbor 206. As discussed herein, the arbor 206 is secured to the housing 102/202/302/402 of the saw 100/200/300/400 in such a way that the longitudinal axis 244 cannot move laterally, vertically and/or horizontally relative to the housing 102/202/302/402 of the saw 100/200/300/400. In other words, the arbor 206, while it can rotate under the power of the motor 104/204, is otherwise in a fixed position and always remains in the fixed position relative the housing 102/202/302/402. As a result, the alignment of the circumferential cutting edge 138/238 of the saw blade 108/208/408 will not change relative to the first major surface 259/359/459 and the second major surface 161 of the mounting plate 116/216/316/416 (discussed herein) and always remain aligned (e.g., parallel) with the direction of travel of the machine 122/222/422 when cutting.

To achieve this, the saw 100/200/300/400 of the present disclosure includes one or more of a bearing mount 246 that attaches the arbor 206 to the housing 102/202/302/402. The bearing mount 246 can include a bearing, such as a ball bearing, having a defined opening through which the shaft 248 of the arbor 206 passes. Examples of the bearing mount 246 for the present disclosure include, but are not limited to, flange bearings (e.g., four bolt flange bearings) and pillow block bearings (solid or split), among others. For the various embodiments, the bearing mount 246 help to constrain the relative motion of the arbor 206 to just rotational motion around the longitudinal axis 244 of the arbor 206, as discussed herein. As a result, the shaft 248 of the arbor 206 is supported by the bearing mount 246 is such a way that no lateral or end forces are transferred to the motor 104/204.

Each of the bearing mount 246 can be mounted to the housing 102/202/302/402 with one or more bolts, with associated nuts, through holes provided in the housing 102/202/302/402. The housing 102/202/302/402 also includes surfaces that define openings through which the shaft 248 of the arbor 206 can pass freely through the housing 102/202/302/402. The holes provided in the housing 102/202/302/402 to attach the bearing mount 246 and allow the mount the shaft 248 of the arbor 206 to pass freely through the housing 102/202/302/402 can be of a size and shape to allow the longitudinal axis of the arbor 206 to be aligned with the longitudinal axis of the drive shaft of the motor 104/204, where such initial adjustments will likely never be needed again.

As discussed herein, the second end 236 of the arbor 206 is coupled to the drive shaft of the motor 104/204. For the various embodiments, a universal joint 250 can be used to connect the second end of the arbor 206 to the drive shaft of the motor 104/204. An example of the universal joint 250 includes a jaw type coupler (e.g., a Lovejoy^{®} L Type Standard Jaw Coupling) that connects the second end 236 of the arbor 206 to the drive shaft of the motor 104/204. In an alternative embodiment, other couplers for joining the second end 236 of the arbor 206 to the drive shaft of the motor 104/204 include a direct coupler system such as a double roller chain coupler. Other coupling systems are also possible.

For the various embodiments, the saw blade 108/208/408 for the present embodiments can be a diamond saw blade, which can include different configurations such as segmented diamond saw blades, continuous rim diamond saw blades and turbo diamond saw blades as are known in the art. The diamond saw blade for the present disclosure can include a bond hardness, diamond concentration and diamond grit size, as are known in the art, that are suitable for cutting the hard material.

Referring now to the shield 110/210/310/410 of the present disclosure, the shield 110/210/310/410 is mounted to the housing 102/202/302/402 of the saw 100/200/300/400. The shield 110/210/310/410 includes a top wall 152/352/452 that covers at least a portion of the first end 234 of the arbor 206. The top wall 152/352/452 has a first major surface 254 space directly across from the first end of the arbor 206 to receive the saw blade 108/208/408, as discussed herein, and a second major surface 156/256/356/456 opposite the first major surface 254. As illustrated in Figs. 1-3, the second major surface 156/256/356/456 includes an elongate mark 158/258/358/458 that is positioned on the second major surface 156/256/356/456 of the shield 110/210/310/410 to align with the circumferential cutting edge 138/238 of the saw blade 108/208/408 when it is mounted on the first end 234 of the arbor 206. For the various embodiments, the elongate mark 158/258/358/458 can be stripe formed with paint, tape or some differentiating elongate indicator that marks the position of the circumferential cutting edge 138/238 of the saw blade 108/208/408 to help the operator of the saw 100/200/300/400 seated in the machine 122/222/422 to accurately align the desired cut.

The shield 110/210/310/410 of the present disclosure can further include a first portion 160/260/360/460 and a second portion 162/262/462 joined to the first portion with a hinge 164/364. For the various embodiments, the first portion 160/260/360/460 of the shield 110/210/310/410 is mounted to the housing 102/202/302/402 and the second portion 162/262/462 of the shield 110/210/310/410 can pivot relative the first portion 160/260/360/460 of the shield and the housing 102/202/302/402 around the hinge 164/364. As illustrated, the shield 110/210/310/410 can also include one or more of a spring 166/266 (e.g., a coil spring), where a first end of the spring 166/266 is joined to the first portion 160/260/360/460 of the shield 110/210/310/410 and a second end of the spring is joined to the second portion 162/262/462 of the shield 110/210/310/410. The spring 166/266 can help to keep the second portion 162/262/462 of the shield 110/210/310/410 in either a closed position as seen in Figs. 1-3 or in an open position, seen in Fig. 4, where more of the saw blade 108/208/408 is exposed for a variety of purposes. For example, placing the second portion 162/262/462 of the shield 110/210/310/410 in the open position allows the saw blade 108/208/408 to be mounted or changed on the arbor 206. In addition, placing the second portion 162/262/462 of the shield 110/210/310/410 in the open position allows the saw blade 108/208/408 to be used to cut a curb (e.g., a stone or concrete edging to a street, parking lot or a path) or to allow cuts to be made up to or very close to a wall.

The saw 100/200/300/400 of the present disclosure can further include a cut indicator 168/368/468 mounted to the housing 102/202/302/402. The cut indicator 168/368/468 can be mounted to the housing 102/202/302/402 through one or more of a hinge 170/370/470. The cut indicator 168/368/468 can further include a cut point indicator 172/372, which points to the location where the cut will be made with the saw blade 108/208/408, and a wheel 174/374/474 that helps to maintain a distance between the cut point indicator 172/372 and the surface to be cut. As illustrated, the cut point indicator 172/372 and the elongate mark 158/258/358/458 on the second major surface 156 of the shield 110/210/310/410 align to allow the operator seated in the machine 122/222/422 to accurately align the desired cut. In addition to the cut indicator 168/368/468, the saw 100/200/300/400 of the present disclosure can further include one or more additional alignment tools, such as a laser cut guideline, or other such cut guide lights.

The cut-depth guide 112/212/312/412 on the housing 102/202/302/402 includes a depth post 176/276/376/476, a sleeve 178/378/478 to receive the depth post 176/276/376/476 and a latch 180/380/480 mounted to the sleeve 178/378/478. The sleeve 178/378/478 includes an interior surface 282/482 that defines an opening 284/384/484 that at least partially surrounds the depth post 176/276/376/476 and through which the depth post 176/276/376/476 can move relative the sleeve 178/378/478. The depth post 176/276/376/476 has a first end 186/286/486, a second end 188/288/388/488 opposite the first end 186/286/486 along a longitudinal axis 190/290/390/490. The housing 102/202/302/402 of the saw 100/200/300/400 can further include a top wall 192/392/492 connected to the first side wall 118/218/418 and the second side wall 120/220. The top wall 192/392/492 includes a first major surface 194/394/494 and a second major surface 296 opposite the first major surface 194/394/494, and a surface 298 extending between the first major surface 194/394/494 and the second major surface 296 to define an opening 201. For the various embodiments, the sleeve 178/378/478 of the cut-depth guide 112/212/312/412 extends in a common direction away from both the first major surface 194/394/494 and the second major surface 296 of the top wall 192/392/492, where the opening 201 through the top wall 192/392/492 aligns with the opening 284/384/484 in the sleeve 178/378/478 of the cut-depth guide 112/212/312/412 to allow the depth post 176/276/376/476 to move through the openings 284/384/484 and 201 relative the sleeve 178/378/478.

As illustrated in Fig. 4, the depth post 476 includes two or more of a surface 403 that are each spaced at a predetermined interval from each other along the longitudinal axis 490 of the depth post 476. The depth post 176/276/376/476 further includes the guide wheel 114/214/314/414, as discussed herein, where the guide wheel 114/214/314/414 extends from the first end 186/286/486 of the depth post 176/276/376/476, where the guide wheel 114/214/314/414 includes a peripheral surface 105/205/405 that can contact the hard surface.

For the various embodiments, the depth post 176/276/376/476/474 can be a tube having a variety of cross-sectional shapes, such as oval and polygonal such as triangular, rectangular, and square, among others. As illustrated in Figs. 1-4, the depth post 176/276/376/476/474 can be a tube 107/207/307/407 having a square cross-sectional shape that includes a first wall 109/209/309/409 and a second wall 111/211/311/411 opposite the first wall 109/209/309/409. For the present embodiment, the first wall 109/209/309/409 includes two or more of the surfaces 403 to define a first series of holes 413 spaced at the predetermined interval from each other along the longitudinal axis 490 of the depth post 476 and the second wall 111/211/311/411 includes two or more of the surfaces 403 to define a second series of holes 415 spaced at the predetermined interval from each other along the longitudinal axis 490. For the various embodiments, the first series of holes 413 and the second series of holes 415 form concentrically aligned pairs of holes that can receive a pin 419 of the latch 180/380/480, as will be discussed herein.

Referring now to the latch 180/380/480, for the various embodiments the latch 180/380/480 has a first portion 417 that releasably engages the surface 403 of the depth post 476 to fix the position of the depth post 476 relative to the sleeve 178/378/478. For the various embodiments, the first portion 417 of the latch 180/380/480 can take the form of a pin 419 having a first end 421 and a second end 423 spaced longitudinally from the first end 421. The pin 419 defines the first portion 417 of the latch 180/380/480 that releasably engages the surface 403 of the depth post 476. The sleeve 178/378/478 of the cut-depth guide 112/212/312/412 can include a first pin guide wall 425 having a first surface 427 defining a first opening 429 to the interior surface 484 of the sleeve 178/378/478 and a second pin guide wall 431 having a second surface 433 defining a second opening 435 to the interior surface 484 of the sleeve 178/378/478. The first opening 429 and the second opening 435 to the interior surface 484 of the sleeve 178/378/478 are concentrically aligned. The first opening 429 and the second opening 435 of the first pin guide wall 425 and the second pin guide wall 431, respectively, releasably receive at least the first portion 417 defined by the pin 419.

For the various embodiments, the latch 180/380/480 can further include a yoke 137/337/437 having a front latch wall 139/339/439, a first side wall 141/341/441 and a second side wall 143/343/443 opposite the first side wall 141/341/441. The front latch wall 139/339/439 includes a first major surface 445 and a second major surface 447 opposite the first major surface 445. The front latch wall 139/339/439 joins the first side wall 141/341/441 and the second side wall 143/343/443 and where both the first side wall 141/341/441 and the second side wall 143/343/443 extend in a common direction from the sleeve 178/378/478 of the cut-depth guide 112/212/312/412.

The front latch wall 139/339/439 further including a surface 449 extending between the first major surface 445 and the second major surface 447 to define an opening 451 that concentrically aligns with the first opening 429 of the first pin guide wall 425 and the second opening 435 of the second pin guide wall 431. For the various embodiments, the pin 419 can extend through the opening 451 in the front latch wall 139/339/439, the first opening 429 in the first pin guide wall 425 and at least partially through the second opening 435 in the second pin guide wall 431 to position the first end 421 of the pin 419 distal to the opening 451 in the front latch wall 139/339/439 and the first opening 429 in the first pin guide wall 425.

For the various embodiments, a handle 153/353/453 can be attached to the pin 419, where the handle 153/353/453 can be positioned proximal to the first major surface 445 of the front latch wall 139/339/439. The latch 180/380/480 can further include a spring 455 positioned between the second major surface 447 of the front latch wall 139/339/439 and the first pin guide wall 425, where a first portion 457 of the spring 455 is joined to the pin 419 such that a force applied to the handle 153/353/453 to move the first end 421 of the pin 419 further away from both the first major surface 445 and the second major surface 447 of the front latch wall 139/339/439 compresses the spring 455.

The mounting plate 116/216/316/416 of the saw 100/200/300/400 includes a first major surface 259/359/459 and a second major surface 161 opposite the first major surface 259/359/459. The first major surface 259/359/459 has a cleat 363/463 for releasably joining the saw 100/200/300/400 to the machine 122/222/422 that provides power to operate the motor 104/204 of the saw 100/200/300/400. The first side wall 118/218/418 and the second side wall 120/220 of housing 102/202/302/402 are coupled to the second major surface 161 of the mounting plate 116/216/316/416, where the first side wall 118/218/418 and the second side wall 120/220 of housing 102/202/302/402 extend in a common direction away from both the first major surface 259/359/459 and the second major surface 161 of the mounting plate 116/216/316/416. In operation, the mounting plate 116/216/316/416 can transfer pressure from the machine 122/222/422 to the guide wheel 114/214/314/414 extending from the first end of the depth post 176/276/476 to maintain a cut depth of the saw blade 108/208/408 determined by the position of the depth post 176/276/476 relative to the sleeve 178/378/478, as discussed herein.

The housing 102/202/302/402 can further include a front housing wall 165/465 extending between the first side wall 118/218/418 and the second side wall 120/220 of the housing 102/202/302/402 define a socket 267 to receive the guide wheel 114/214/314/414. For the various embodiments, the two or more of the surface 403 of the depth post 476 can include a terminal surface 469 to receive the first portion 417 of the latch 180/380/480 to fix the guide wheel 114/214/314/414 at least partially within the socket 267 of the housing 102/202/302/402 so that only a portion of the peripheral surface 105/205/405 of the guide wheel 114/214/314/414 that contacts the hard material when the mounting plate transfers pressure from the machine to the guide wheel 114 extends from the socket 267 to place the saw blade 108/208/408 at a full depth cutting position for the saw 100/200/300/400.

In an additional embodiment, the front housing wall 165/465 includes a first major planar surface 171 and a second major planar surface 273 opposite the first major planar surface 171. For the various embodiments, only the first portion 160/260/360/460 of the shield 110/210/310/410 mounted to the housing 102/202/302/402 extends distally from both the first major planar surface 171 and the second major planar surface 273 of the front housing wall 165/465. In addition, as illustrated the motor 104/204 is mounted on the first side wall 118/218/418 so that it does not limit the cutting depth of the saw 100/200/300/400. In addition, besides the saw blade 108/208/408 and the first portion 160/260/360/460 of the shield 110/210/310/410, no other components extend beyond the first major planar surface 171 of the front housing wall 165/465. This allows the first major planar surface 171 of the front housing wall 165/465 to contact any surface that is being cut first (e.g., when cutting "tall back" curb) and thereby prevent damage to any of the other components of the saw 100/200/300/400.

In addition, the first major planar surface 171 and the second major planar surface 273 are approximately perpendicular to a planar surface of the hard material being cut by the saw when the saw blade is at the full depth cutting position. To achieve this feature of the present disclosure, the first side wall 118/218/418 and the second side wall 120/220 of the housing 102/202/302/402 can each have the shape of a convex polygon having five peripheral straight edges that define five corners. For the five peripheral straight edges, a first edge 475 is parallel with both the first major surface 259/359/459 and the second major surface 161 of the mounting plate 116/216/316/416; a second edge 477 extends from both the first major surface 259/359/459 and the second major surface 161 of the mounting plate 116/216/316/416 to form a first corner 479 having an interior angle of approximately 83 degrees with the first edge 475; a third edge 481 extends from both the first major surface 259/359/459 and the second major surface 161 of the mounting plate 116/216/316/416 to form a second corner 483 having an interior angle of approximately 81 degrees with the first edge 475; a fourth edge 485 extends from the third edge 481 to form a third corner 487 having an interior angle of approximately 172 degrees with the third edge 481; and a fifth edge 489 extends from the fourth edge 485 to form a fourth corner 491 having an interior angle of approximately 90 degrees with the fourth edge 485, and extends from the third edge 481 to form a fifth corner 493 having an interior angle of approximately 114 degrees with the third edge 481. For the various embodiments, when the saw blade 108/208/408 is at the full depth cutting position the fourth edge 485 of each of the first side wall 118/218/418 and the second side wall 120/220 of the housing 102/202/302/402 is approximately parallel with the planar surface of the hard material.

For the various embodiments, the saw 100/200/300/400 can further include an "on-board" fluid supply system. The on-board fluid supply system includes a tank 195/295/395/495 mounted to the mounting plate 116/216/316/416 to supply fluid to the saw blade 108/208/408. The tank 195/295/395/495 can include a tank inlet 197/397/497 to receive a fluid and a tank outlet 199 through which the fluid can flow. The saw 100/200/300/400 further includes a pump 1-101 having a pump inlet fluidly coupled to the tank outlet 199 and a pump outlet for pumping the fluid from the tank 195/295/395/495. A valve 1-103 having a valve inlet is fluidly coupled to the pump outlet and a value outlet, where the value 1-103 can adjust a flow rate of the fluid from the pump 1-101. The saw 100/200/300/400 further includes an outlet nozzle 1-105 fluidly coupled to the value outlet, where the outlet nozzle 1-105 is located at a position adjacent the shield 110/210/310/410 to supply the fluid to the saw blade 108/208/408. The valve 1-103 can be used to adjust the fluid flow to the desired rate. For the various embodiments, the fluid is water.

An advantage of this "on-board" fluid supply system is that there is no longer a need to tether the saw 100/200/300/400 to a fluid supply line (e.g., a water hose) during a cutting operation. In addition, the tank 195/295/395/495 of the on-board" fluid supply system is always with the saw 100/200/300/400 for use when needed. This is especially useful when a water source is not readily available where the saw 100/200/300/400 will be used (e.g., in high congestion or traffic areas).

## Claims

1. A saw (100, 200, 300, 400) for cutting a hard material, the saw (100, 200, 300, 400) comprising:
a housing (102, 202, 302, 402) having a first side wall (118, 218, 418) and a second side wall (120, 220);
a motor (104, 204) mounted to the first side wall of the housing (102, 202, 302, 402), where the motor (104, 204) includes a drive shaft;
an arbor (206) mounted to the second side wall of the housing (102, 202, 302, 402), wherein the arbor (206) includes a first end (234) and a second end opposite the first end (234), wherein the first end (234) can receive a saw blade (108, 208, 408) having a circumferential cutting edge, wherein the drive shaft of the motor (104, 204) turns the second end of the arbor (206) to rotate the circumferential cutting edge (138, 238) of the saw blade (108, 208, 408), **characterized in that** the arbor (206) is in a fixed position relative to the housing (102, 202, 302, 402) of the saw (100, 200, 300, 400);
a shield (110, 210, 310, 410) mounted to the housing (102, 202, 302, 402), the shield (110, 210, 310, 410) having a top wall that covers at least a portion of the first end (243) of the arbor (206), the top wall having a first major surface space directly across from the first end (234) of the arbor (206) so as to receive the saw blade (108, 208, 408) and a second major surface opposite the first major surface, wherein the second major surface has an elongate mark that aligns with the circumferential cutting edge (138, 238) of the saw blade (108, 208, 408) when mounted on the first end (234) of the arbor (206);
a cut-depth guide (112, 212, 312, 412) on the housing (102, 202, 302, 402), the cut-depth guide (112, 212, 312, 412) having a depth post (176, 276, 376, 476), a sleeve (178, 378, 478) to receive the depth post (176, 276, 376, 476) and a latch (180, 380, 480) mounted to the sleeve (178, 378, 478), wherein:
the sleeve (178, 378, 478) includes an interior surface (282, 482) that defines an opening (284, 384, 484) that at least partially surrounds the depth post (176, 276, 376, 476) and through which the depth post (176, 276, 376, 476) can move relative the sleeve (178, 378, 478);
the depth post (176, 276, 376, 476) has a first end (186, 286, 486), a second end (188, 288, 388, 488) opposite the first end (186, 286, 486) along a longitudinal axis (190, 290, 390, 490), and has two or more of a surface that are each spaced at
a predetermined interval from each other along the longitudinal axis (190, 290, 390, 490); and
the latch (180, 380, 480) has a first portion (417) that releasably engages the surface (403) of the depth post (476) to fix the position of the depth post (476) relative to the sleeve (178, 378, 478);
a guide wheel (114, 214, 414) extending from the first end (186, 286, 486) of the depth post (176, 276, 376, 476), the guide wheel (114, 214, 414) having a peripheral surface (105, 205, 405) that can contact the hard surface; and
a mounting plate (116, 216, 316, 416) having a first major surface (259, 359, 459) and a second major surface (161) opposite the first major surface (259, 359, 459), wherein the first major surface (259, 359, 459) has a cleat for releasably joining the saw (100, 200, 300, 400) to a machine (122, 222, 422) that provides power to operate the motor (104, 204) of the saw (100, 200, 300, 400), wherein the first side wall (118, 218, 418) and the second side wall (120, 220) of housing (102, 202, 302, 402) are coupled to the second major surface (161) and extend in a common direction away from both the first major surface (259, 359, 459) and the second major surface (161) of the mounting plate (116, 216, 316, 416),
wherein the saw (100, 200, 300, 400) is configured such that the alignment of the circumferential cutting edge (138, 238) of the saw blade (108, 208, 408) will not change relative to the first major surface (259, 359, 459) and the second major surface (161) of the mounting plate (116, 216, 316, 416), and wherein the mounting plate (116, 216, 316, 416) can transfer pressure from the machine (122, 222, 422) to the guide wheel (114, 214, 414) extending from the first end (234) of the depth post to maintain a cut depth of the saw blade (108, 208, 408) determined by the position of the depth post (176, 276, 376, 476) relative to the sleeve (178, 378, 478).

2. The saw (100, 200, 300, 400) of claim 1, wherein the arbor (206) includes a longitudinal axis (190, 290, 390, 490) extending between the first end (234) and the second end (236) of the arbor (206), wherein the longitudinal axis (190, 290, 390, 490) cannot move relative to the housing (102, 202, 302, 402) of the saw (100, 200, 300, 400).

3. The saw (100, 200, 300, 400) of claim 1, wherein the saw includes only one of a hydraulic motor, wherein the motor (104, 204) mounted to the first side wall (118, 218, 418) of the housing (102, 202, 302, 402) is the hydraulic motor driven by power provided by an auxiliary hydraulic power supply of the machine (122, 222, 422).

4. The saw of claim 3, wherein all the power provided by the auxiliary hydraulic power supply of the machine (122, 222, 422) is used to operate the hydraulic motor; or
wherein the saw includes an inline check-valve hydraulically coupled to the hydraulic motor.

5. The saw of any one of claims 1-4, wherein a universal joint connects the second end (236) of the arbor (206) to the drive shaft of the motor (104, 204).

6. The saw of claim 5, wherein the universal joint is a jaw type coupler that connects the second end (236) of the arbor (206) to the drive shaft of the motor (104, 204).

7. The saw of any one of claims 1-6, wherein one or more of a bearing mount (246) attaches the arbor (206) to the housing (102, 202, 302, 402); or
wherein the housing (102, 202, 302, 402) further includes a top wall (192, 392, 492) connected to the first side wall (118, 218, 418) and the second side wall (120, 220), the top wall (192, 392, 492) having:
a first major surface (194, 394, 494) and a second major surface (298) opposite the first major surface (194, 394, 494); and
a surface extending between the first major surface (194, 394, 494) and the second major surface (298) to define an opening (284, 384, 484);
wherein the sleeve (178, 378, 478) of the cut-depth guide (112, 212, 312, 412) extends in a common direction away from both the first major surface (194, 394, 494) and the second major surface (296) of the top wall (192, 392, 492) and wherein the opening (201) through the top wall (192, 292, 492) aligns with the opening (201) in the sleeve (178, 378, 478) of the cut-depth guide (112, 212, 312, 412) to allow the depth post (176, 276, 376, 476) to move through the openings (284, 384, 484, 201)relative the sleeve (178, 378, 478).

8. The saw (100, 200, 300, 400) of any one of claims 1-7, wherein the latch (180, 380, 480) includes a pin (419) having a first end (421) and a second end (423) spaced longitudinally from the first end (421), wherein the pin defines the first portion (417) of the latch (180, 380, 480) that releasably engages the surface (403) of the depth post (476); and
wherein the sleeve (178, 378, 478) of the cut-depth guide (112, 212, 312, 412) includes a first pin guide wall (425) having a first surface (427) defining a first opening (429) to the interior surface (484) of the sleeve (178, 378, 478) and a second pin guide wall (431) having a second surface (433) defining a second opening (435) to the interior surface (484) of the sleeve (178, 378, 478), wherein the first opening (429) and the second opening (435) to the interior surface (484) of the sleeve (178, 378, 478) are concentrically aligned and wherein the first pin guide wall (425) and the second pin guide wall (431) releasably receive at least the first portion (417) defined by the pin (419).

9. The saw (100, 200, 300, 400) of claim 8, wherein the depth post (176, 276, 376, 476, 474) is a tube (107, 207, 307, 407) having a square cross-sectional shape that includes a first wall (109, 209, 309, 409) and a second wall (111, 211, 311, 411) opposite the first wall (109, 209, 309, 409), wherein the first wall (109, 209, 309, 409) includes two or more of the surfaces (403) to define a first series of holes (413) spaced at the predetermined interval from each other along the longitudinal axis (490) and the second wall (111, 211, 311, 411) includes two or more of the surfaces (403) to define a second series of holes (415) spaced at the predetermined interval from each other along the longitudinal axis (490) and wherein the first series of holes (413) and the second series of holes (415) form concentrically aligned pairs of holes that can receive the pin (419).

10. The saw (100, 200, 300, 400) of any one of claims 8-9, wherein the latch (180, 380, 480) further includes a yoke (137, 337, 437) having:
a front latch wall (139, 339, 439) with a first major surface (445) and a second major surface (447) opposite the first major surface (445);
a first side wall (141, 341, 441) and a second side wall (143, 343, 443) opposite the first side wall (143, 343, 443), wherein the front wall (139, 339, 439) joins the first side wall (141, 341, 441) and the second side wall (143, 343, 443) and wherein both the first side wall (141, 341, 441) and the second side wall (143, 343, 443) extend in a common direction from the sleeve (178, 378, 478) of the cut-depth guide (112, 212, 312, 412), the front latch wall (139, 339, 439) further including a surface (449) extending between the first major surface (445) and the second major surface (447) to define an opening (451) that concentrically aligns with the first opening (429) of the first pin guide wall (425) and the second opening (435) of the second pin guide wall (431), wherein the pin (419) extends through the opening (435) in the front latch wall (139, 339, 439), the first opening (429) in the first pin guide wall (425) and at least partially through the second opening (435) in the second pin guide wall (431) to position the first end (421) of the pin (419) distal to the opening (451) in the front latch wall (139, 339, 439) and the first opening (429) in the first pin guide wall (425);
a handle (153, 353, 453) attached to the pin (419), the handle (153, 353, 453) positioned proximal to the first major surface (445) of the front latch wall (139, 339, 439); and
a spring (455) positioned between the second surface of the front latch wall (139, 339, 439) and the first pin guide wall (425), wherein a first portion (417) of the spring (455) is joined to the pin (419) such that a force applied to the handle to move the first end (421) of the pin (419) further away from both the first major surface (445) and the second major surface (447) of the front latch wall (139, 339, 439) compresses the spring (455).

11. The saw (100, 200, 300, 400) of any one of claims 1-10, wherein the housing (102, 202, 302, 402) further includes a front housing wall (165, 465) extending between the first side wall (118, 218, 418) and the second side wall (120, 220)of the housing (102, 202, 302, 402), wherein the front housing defines a socket (267) to receive the guide wheel (114, 214, 314, 414).

12. The saw (100, 200, 300, 400) of claim 11, wherein the two or more of the surface (403) of the depth post (476) includes a terminal surface (469) to receive the first portion (417) of the latch (180, 380, 480) to fix the guide wheel (114, 214, 314, 414) at least partially within the housing (102, 202, 302, 402) so that only a portion of the peripheral surface (105, 205, 405) that contacts the hard material when the mounting plate transfers pressure from the machine to the guide wheel (114) extends from the socket (267) to place the saw blade (108, 208, 408) at a full depth cutting position for the saw (100, 200, 300, 400); or
wherein the front housing wall (165, 465) includes a first major planar surface (171) and a second major planar surface (273) opposite the first major planar surface (171), wherein the first major planar surface (171) and the second major planar surface (273) are approximately perpendicular to a planar surface of the hard material being cut by the saw (100, 200, 300, 400) when the saw blade (108, 208, 408) is at the full depth cutting position; or
where the first side wall (118, 218, 418) and the second side wall (120, 220) of the housing (102, 202, 302, 402) each have the shape of a convex polygon having five peripheral straight edges that define five corners, wherein:
a first edge (475) is parallel with both the first major surface (259, 359, 459) and the second major surface (161) of the mounting plate (116, 216, 316, 416);
a second edge (477) extends from both the first major surface (259, 359, 459) and the second major surface (161) of the mounting plate (116, 216, 316, 416) to form a first corner (479) having an interior angle of approximately 83 degrees with the first edge (475);
a third edge (481) extends from both the first major surface (259, 359, 459) and the second major surface (161) of the mounting plate (116, 216, 316, 416) to form a second corner (483) having an interior angle of approximately 81 degrees with the first edge (475);
a fourth edge (475) extends from the third edge (481) to form a third corner (487) having an interior angle of approximately 172 degrees with the third edge (481); and
a fifth edge (489) extends from the fourth edge (485) to form a fourth corner (491) having an interior angle of approximately 90 degrees with the fourth edge (485), and extends from the third edge (481) to form a fifth corner (493) having an interior angle of approximately 114 degrees with the third edge (481).

13. The saw (100, 200, 300, 400) of claim 12, wherein when the saw blade (108, 208, 408) is at the full depth cutting position the fourth edge (485) of each of the first side wall (118, 218, 418) and the second side wall (120, 220) of the housing (102, 202, 302, 402) is approximately parallel with the planar surface of the hard material.

14. The saw (100, 200, 300, 400) of any one of claims 11-13, wherein only a portion of the shield (110, 210, 310, 410) mounted to the housing (102, 202, 302, 402) extends distally from both the first major planar surface (171) and the second major planar surface (273) of the front housing wall (165, 465).

15. The saw (100, 200, 300, 400) of any one of claims 1-14, wherein the shield (110, 210, 310, 410) includes a first portion (160, 260, 360, 460) and second portion (162, 262, 462) joined to the first portion (160, 260, 360, 460) with a hinge, wherein the first portion (160, 260, 360, 460) of the shield (110, 210, 310, 410) is mounted to the housing (102, 202, 302, 402) and the second portion (162, 262, 462) of the shield (110, 210, 310, 410) can pivot relative the first portion (160, 260, 360, 460) of the shield and the housing (102, 202, 302, 402) around the hinge (164, 364); or
wherein the saw (100, 200, 300, 400) further includes a tank (195, 295, 395, 495) mounted to the mounting plate (116, 216, 316, 416), the tank (195, 295, 395, 495) having a tank inlet (197, 397, 497) to receive a fluid and a tank outlet (199) through which the fluid can flow;
a pump (1-101) having a pump inlet fluidly coupled to the tank outlet (199) and a pump outlet for pumping the fluid from the tank (195, 295, 395, 495);
a valve (1-103) having a valve inlet fluidly coupled to the pump outlet and a value outlet, wherein the value (1-103) can adjust a flow rate of the fluid from the pump (1-101); and
an outlet nozzle (1-105) fluidly coupled to the value outlet, wherein the outlet nozzle (1-105) is located at a position adjacent the shield (110, 210, 310, 410) to supply the fluid to the saw blade (108, 208, 408).

## Patentansprüche

1. Eine Säge (100, 200, 300, 400) zum Schneiden eines harten Materials, wobei die Säge (100, 200, 300, 400) umfassend:
ein Gehäuse (102, 202, 302, 402) mit einer ersten Seitenwand (118, 218, 418) und einer zweiten Seitenwand Wand (120, 220) aufweist;
einen Motor (104, 204), der an der ersten Seitenwand des Gehäuses (102, 202, 302, 402) montiert ist, wobei der Motor (104, 204) eine Antriebswelle beinhaltet;
einen Dorn (206), der an der zweiten Seitenwand des Gehäuses (102, 202, 302, 402) montiert ist, wobei der Dorn (206) ein erstes Ende (234) und ein zweites Ende gegenüber dem ersten Ende (234) aufweist, wobei das erste Ende (234) eine Sägeklinge (108, 208, 408) aufnehmen kann, die eine Umfangsschneide hat, Schneidkante aufnehmen kann, wobei die Antriebswelle des Motors (104, 204) das zweite Ende des Dorns (206) dreht, (206) dreht, um die Umfangsschneide (138, 238) des Sägeblattes (108, 208, 408) zu drehen, **dadurch gekennzeichnet, dass** sich der Dorn (206) in einer festen Position relativ zu dem Gehäuse (102, 202, 302, 402) der Säge (100, 200, 300, 400) befindet;
eine Abschirmung (110, 210, 310, 410), die an dem Gehäuse (102, 202, 302, 402) montiert ist, wobei die Abschirmung (110, 210, 310, 410) eine obere Wand aufweist, die zumindest einen Teil des ersten Endes (243) des Dorns (206) bedeckt, wobei die obere Wand einen ersten großen Flächenraum direkt gegenüber dem ersten Ende (234) des Dorns (206), um die Sägeblatt (108, 208, 408) aufzunehmen, und eine zweite Hauptfläche Oberfläche gegenüber der ersten Hauptoberfläche, wobei die zweite Hauptoberfläche eine längliche Markierung aufweist, die mit der Umfangsschneide (138, 238) der Sägeblatts (108, 208, 408) ausgerichtet ist, wenn sie auf dem ersten Ende (234) des Dorns (206) montiert ist;
eine Schnitttiefenführung (112, 212, 312, 412) am Gehäuse (102, 202, 302, 402), wobei die Schnitttiefenführung (112, 212, 312, 412) einen Tiefenpfosten (176, 276, 376, 476), eine Hülse (178, 378, 478) zum den Tiefenpfosten (176, 276, 376, 476) aufzunehmen und eine Verriegelung (180, 380, 480), die an der Hülse (178, 378, 478) montiert ist, wobei:
die Hülse (178, 378, 478) eine Innenfläche (282, 482) aufweist, die eine Öffnung (284, 384, 484) definiert, die den Tiefenpfosten (176, 276, 376, 476) zumindest teilweise umgibt (176, 276, 376, 476) umgibt und durch die sich der Tiefenpfosten (176, 276, 376, 476) sich relativ zur Hülse (178, 378, 478) bewegen kann;
der Tiefenpfosten (176, 276, 376, 476) ein erstes Ende (186, 286, 486), ein zweites Ende (188, 288, 388, 488) gegenüber dem ersten Ende (186, 286, 486) entlang einer Längsachse (190, 290, 390, 490) und hat zwei oder mehr Oberflächen, die jeweils in einem vorgegebenen Abstand voneinander entlang der Längsachse (190, 290, 390, 490) beabstandet sind; und
die Verriegelung (180, 380, 480) weist einen ersten Abschnitt (417) auf, der lösbar in Eingriff die Oberfläche (403) des Tiefenpfostens (476) in Eingriff nimmt, um die Position des Tiefenpfostens (476) relativ zu der Hülse (178, 378, 478) zu fixieren;
ein Führungsrad (114, 214, 414), das sich von dem ersten Ende (186, 286, 486) des Tiefen-Tiefenpfostens (176, 276, 376, 476) erstreckt, wobei das Führungsrad (114, 214, 414) eine Umfangsfläche (105, 205, 405) aufweist, die die harte Oberfläche berühren kann; und
eine Montageplatte (116, 216, 316, 416) mit einer ersten Hauptfläche (259, 359, 459) und einer zweite Hauptfläche (161) gegenüber der ersten Hauptfläche (259, 359, 459), wobei die erste
Hauptfläche (259, 359, 459) eine Klammer zum lösbaren Verbinden der Säge (100, 200, 300, 400) mit einer Maschine (122, 222, 422) zum Bereitstellen von Leistung zum Betreiben des Motors (104, 204) der Säge (100, 200, 300, 400) bereitstellt, wobei die erste Seitenwand (118, 218, 418) und die zweite Seitenwand (120, 220) des Gehäuses (102, 202, 302, 402) an die zweite Hauptfläche (161) gekoppelt sind und sich in eine gemeinsamen Richtung weg von sowohl der ersten Hauptfläche (259, 359, 459) als auch der zweiten Hauptfläche Oberfläche (161) der Montageplatte (116, 216, 316, 416) weg verlaufen, wobei die Säge (100, 200, 300, 400) so konfiguriert ist, dass die Ausrichtung der Umfangs-Schneidkante (138, 238) des Sägeblattes (108, 208, 408) sich nicht relativ zu der ersten Hauptfläche (259, 359, 459) und der zweiten Hauptfläche (161) der Montageplatte (116, 216, 316, 416) nicht ändert, und wobei die Montageplatte (116, 216, 316, 416) Druck von der Maschine (122, 222, 422) auf das Führungsrad (114, 214, 414) übertragen kann, das sich von dem ersten Ende (234) des Tiefenpfostens erstreckt, um eine Schnitttiefe des Sägeblattes (108, 208, 408) aufrechtzuerhalten, die durch die Position des Tiefenpfostens (176, 276, 376, 476) relativ zur Hülse (178, 378, 478) bestimmt wird.

2. Die Säge (100, 200, 300, 400) nach Anspruch 1, wobei der Dorn (206) eine Längsachse Achse (190, 290, 390, 490) beinhaltet, die sich zwischen dem ersten Ende (234) und dem zweiten Ende (236) des Achse (206) erstreckt, wobei sich die Längsachse (190, 290, 390, 490) relativ zu dem Gehäuse (102, 202, 302, 402) der Säge (100, 200, 300, 400) nicht bewegen kann.

3. Die Säge (100, 200, 300, 400) nach Anspruch 1, wobei die Säge nur einen von einem Hydraulikmotors beinhaltet, wobei der Motor (104, 204), der an der ersten Seitenwand (118, 218, 418) des Gehäuses (102, 202, 302, 402) montiert ist, der von der Leistung eines Hilfs-Hydraulikaggregat der Maschine (122, 222, 422) angetrieben wird.

4. Die Säge nach Anspruch 3, wobei die gesamte Leistung, die durch die Hilfshydraulikversorgung der Maschine (122, 222, 422) bereitgestellt wird, verwendet wird, um den Hydraulikmotor zu betreiben; oder
wobei die Säge ein in Reihe geschaltetes Rückschlagventil enthält, das hydraulisch mit dem Hydraulikmotor
Motor gekoppelt ist.

5. Die Säge nach einem der Ansprüche 1-4, wobei ein Universalgelenk das zweite Ende (236) des Dorns (206) mit der Antriebswelle des Motors (104, 204) verbindet.

6. Die Säge nach Anspruch 5, wobei das Universalgelenk ein Backentypkoppler ist, der das zweites Ende (236) des Dorns (206) mit der Antriebswelle des Motors (104, 204) verbindet.

7. Die Säge nach einem der Ansprüche 1-6, wobei eine oder mehrere Lagerhalterungen (246) den Dorn (206) am Gehäuse (102, 202, 302, 402) befestigt; oder
wobei das Gehäuse (102, 202, 302, 402) ferner eine obere Wand (192, 392, 492) beinhaltet, die mit der ersten Seitenwand (118, 218, 418) und der zweiten Seitenwand (120, 220) verbunden ist, wobei die obere Wand (192, 392, 492) aufweist:
eine erste Hauptfläche (194, 394, 494) und eine zweite Hauptfläche (298) gegenüber der ersten Hauptfläche (194, 394, 494); und
eine Fläche, die sich zwischen der ersten Hauptfläche (194, 394, 494) und der zweiten Hauptfläche (298) erstreckt, um eine Öffnung (284, 384, 484) zu definieren;
wobei sich die Hülse (178, 378, 478) der Schnitttiefenführung (112, 212, 312, 412) in eine gemeinsame Richtung weg von sowohl der ersten Hauptfläche (194, 394, 494) als auch der zweiten Hauptfläche Fläche (296) der oberen Wand (192, 392, 492) weg erstreckt, und wobei die Öffnung (201) durch die obere Wand (192, 292, 492) mit der Öffnung (201) in der Hülse (178, 378, 478) der Schnitttiefenführung (112, 212, 312, 412) ausrichtet, (112, 212, 312, 412) aus, damit sich der Tiefenpfosten (176, 276, 376, 476) durch die Öffnungen (284, 384, 484, 201) relativ zur Hülse (178, 378, 478) bewegt.

8. Die Säge (100, 200, 300, 400) nach einem der Ansprüche 1-7, wobei die Verriegelung (180, 380, 480) einen Stift (419) beinhaltet, der ein erstes Ende (421) und ein zweites Ende (423) aufweist, die in Längsrichtung von dem ersten Ende (421) beabstandet ist, wobei der Stift den ersten Abschnitt (417) der Verriegelung (180, 380, 480) definiert, der lösbar in die Oberfläche (403) des Tiefenpfostens (476) eingreift; und
wobei die Hülse (178, 378, 478) der Schnitttiefenführung (112, 212, 312, 412) eine erste Stiftführungswand (425) mit einer ersten Oberfläche (427), die eine erste Öffnung (429) zur Innenfläche (484) der Hülse (178, 378, 478) definiert, und eine zweite Stiftführungswand (431) mit einer zweiten Oberfläche (433) aufweist, die eine zweite Öffnung (435) zur Innenfläche (484) der Hülse (178, 378, 478) definiert, wobei die erste Öffnung (429) und die zweite Öffnung (435) zur Innenfläche (484) der Hülse (178, 378, 478) konzentrisch ausgerichtet sind und wobei die erste Stiftführungswand (425) und die zweite Stiftführungswand (431) zumindest den ersten Abschnitt (417), die durch den Stift (419) definiert ist.

9. Die Säge (100, 200, 300, 400) nach Anspruch 8, wobei der Tiefenpfosten (176, 276, 376, 476, 474) ein Rohr (107, 207, 307, 407) mit einer quadratischen Querschnittsform ist, die eine erste Wand (109, 209, 309, 409) und eine zweite Wand (111, 211, 311, 411) gegenüber der ersten Wand (109, 209, 309, 409) gegenüberliegt, wobei die erste Wand (109, 209, 309, 409) zwei oder mehr der Flächen (403) beinhaltet, um eine erste Reihe von Löchern (413) zu definieren, die in dem vorgegebenen Abstand voneinander entlang der Längsachse (490) beabstandet sind, und die zweite Wand (111, 211, 311, 411) zwei oder mehr der Flächen (403), um eine zweite Reihe von Löchern (415) zu definieren, die in dem vorbestimmten Intervall voneinander entlang der Längsachse (490) beabstandet sind und wobei die erste Reihe von Löchern (413) und die zweite Reihe von Löchern (415) konzentrisch ausgerichtete Lochpaare bilden, die den Stift (419) aufnehmen können.

10. Die Säge (100, 200, 300, 400) nach einem der Ansprüche 8-9, wobei die Verriegelung (180, 380, 480) ferner ein Joch (137, 337, 437) beinhaltet, das Folgendes aufweist:
eine vordere Verriegelungswand (139, 339, 439) mit einer ersten Hauptfläche (445) und einer zweiten Hauptfläche (447) gegenüber der ersten Hauptfläche (445);
eine erste Seitenwand (141, 341, 441) und eine zweite Seitenwand (143, 343, 443) gegenüber der ersten Seitenwand (143, 343, 443), wobei die Vorderwand (139, 339, 439) die erste Seitenwand (141, 341, 441) und der zweiten Seitenwand (143, 343, 443) verbindet und wobei sowohl die erste Seitenwand (141, 341, 441) als auch die zweite Seitenwand (143, 343, 443) sich in einer
gemeinsamen Richtung von der Hülse (178, 378, 478) der Schnitttiefenführung (112, 212, 312, 412) erstrecken, wobei die vordere Verriegelungswand (139, 339, 439) ferner eine Oberfläche (449) beinhaltet, die sich zwischen der ersten Hauptfläche (445) und der zweiten Hauptfläche (447) erstreckt, um eine Öffnung (451) definiert, die sich konzentrisch mit der ersten Öffnung (429) der ersten Stiftführungswand und der zweiten Öffnung (435) der zweiten Stiftführungswand (431) konzentrisch ausrichtet, wobei der Stift (419) sich durch die Öffnung (435) in der vorderen Verriegelungswand (139, 339, 439), die erste Öffnung (429) in der ersten Stiftführungswand (425) und zumindest teilweise durch die
zweiten Öffnung (435) in der zweiten Stiftführungswand (431), um das erste Ende (421) des des Stifts (419) distal zur Öffnung (451) in der vorderen Verriegelungswand (139, 339, 439) und der ersten Öffnung (429) in der ersten Stiftführungswand (425) zu positionieren;
einen Griff (153, 353, 453), der an dem Stift (419) angebracht ist, wobei der Griff (153, 353, 453) proximal zu der ersten Hauptfläche (445) der vorderen Verriegelungswand (139, 339, 439); und
eine Feder (455), die zwischen der zweiten Oberfläche der vorderen Verriegelungswand (139, 339, 439) und der ersten Stiftführungswand (425) positioniert ist, wobei ein erster Abschnitt (417) der Feder (455) mit dem Stift (419) zusammengefügt ist, so dass eine Kraft, die auf den Griff ausgeübt wird, um das erste Ende (421) des Stifts (419) weiter weg von sowohl der ersten Hauptfläche (445) als auch der zweiten Hauptfläche (447) der vorderen Verriegelungswand (139, 339, 439) weiter weg bewegt, die Feder (455) zusammengedrückt wird (455).

11. Die Säge (100, 200, 300, 400) nach einem der Ansprüche 1-10, wobei das Gehäuse (102, 202, 302, 402) ferner eine vordere Gehäusewand (165, 465) beinhaltet, die sich zwischen der ersten Seitenwand (118, 218, 418) und der zweiten Seitenwand (120, 220) des Gehäuses (102, 202, 302, 402) erstreckt, wobei das vordere Gehäuse eine Buchse (267) definiert, um das Führungsrad (114, 214, 314, 414) aufzunehmen.

12. Die Säge (100, 200, 300, 400) nach Anspruch 11, wobei die zwei oder mehr der Fläche (403) des Tiefenpfostens (476) eine Anschlussfläche (469) beinhaltet, um den ersten Abschnitt (417) der Verriegelung (180, 380, 480) aufzunehmen, um das Führungsrad (114, 214, 314, 414) zumindest teilweise innerhalb des Gehäuse (102, 202, 302, 402) zu fixieren, so dass nur ein Teil der Umfangsfläche (105, 205, 405), die das harte Material berührt, wenn die Montageplatte Druck von der Maschine auf das Führungsrad (114) überträgt, sich von der Buchse (267) erstreckt, um das Sägeblatt (108, 208, 408) in eine volle Schneidposition für die Säge (100, 200, 300, 400) zu platzieren; oder
wobei die vordere Gehäusewand (165, 465) eine erste Hauptebene (171) und eine zweite Hauptebenfläche (273) gegenüber der ersten Hauptebenfläche (171) beinhaltet, wobei die erste Hauptebenfläche (171) und die zweite Hauptebenfläche (273) in etwa senkrecht zu einer ebenen Fläche des harten Materials sind, das durch die Säge (100, 200, 300, 400) geschnitten wird, wenn die Sägeblatt (108, 208, 408) an der vollen Tiefenschneidposition ist; oder
wobei die erste Seitenwand (118, 218, 418) und die zweite Seitenwand (120, 220) des Gehäuses (102, 202, 302, 402) jeweils die Form eines konvexen Polygons mit fünf peripheren geraden Kanten aufweisen, die fünf Ecken definieren, wobei:
eine erste Kante (475) parallel sowohl der ersten Hauptfläche (259, 359, 459) als auch der zweiten Hauptfläche (161) der Montageplatte (116, 216, 316, 416) parallel ist;
eine zweite Kante (477) sich sowohl von der ersten Hauptfläche (259, 359, 459) als auch der zweiten Hauptfläche (161) der Befestigungsplatte (116, 216, 316, 416) erstreckt, um eine erste Ecke (479) mit einem Innenwinkel von etwa 83 Grad mit der ersten Kante (475);
eine dritte Kante (481) sich sowohl von der ersten Hauptfläche (259, 359, 459) als auch der zweiten Hauptfläche (161) der Montageplatte (116, 216, 316, 416) erstreckt, um eine zweite Ecke (483) mit einem Innenwinkel von etwa 81 Grad mit der ersten Kante (475) bildet;
eine vierte Kante (475) sich von der dritten Kante (481) erstreckt, um eine dritte Ecke (487) zu bilden, mit einem Innenwinkel von etwa 172 Grad mit der dritten Kante (481); und eine fünfte Kante (489) sich von der vierten Kante (485) erstreckt, um eine vierte Ecke (491) mit einem Innenwinkel von ungefähr 90 Grad mit der vierten Kante (485) aufweist und sich von der dritten Kante (481) zu einer fünften Ecke (493) mit einem Innenwinkel von ungefähr 114 Grad mit der dritten Kante (481) aufweist.

13. Die Säge (100, 200, 300, 400) nach Anspruch 12, wobei, wenn die Sägeblatt (108, 208, 408) in der Schnittposition mit voller Tiefe befindet, die vierte Kante (485) jeder der ersten Seitenwand (118, 218, 418) und der zweiten Seitenwand (120, 220) des Gehäuses (102, 202, 3020, 402) ungefähr parallel zur ebenen Fläche des harten Materials ist.

14. Die Säge (100, 200, 300, 400) nach einem der Ansprüche 11-13, wobei nur ein Teil der Abschirmung (110, 210, 310, 410), die an dem Gehäuse (102, 202, 302, 402) montiert ist, sich distal von sowohl der ersten Hauptebenfläche (171) als auch der zweiten Hauptebenfläche (273) der vorderen Gehäusewand (165, 465) erstreckt.

15. Die Säge (100, 200, 300, 400) nach einem der Ansprüche 1-14, wobei die Abschirmung (110, 210, 310, 410) einen ersten Abschnitt (160, 260, 360, 460) und einen zweiten Abschnitt (162, 262, 462) beinhaltet, die ersten Abschnitt (160, 260, 360, 460) mit einem Scharnier verbunden sind, wobei der erste Abschnitt (160, 260, 360, 460) der Abschirmung (110, 210, 310, 410) an dem Gehäuse (102, 202, 302, 402) montiert ist und der zweite Abschnitt (162, 262, 462) der Abschirmung (110, 210, 310, 410) kann sich relativ zum ersten Abschnitt (160, 260, 360, 460) der Abschirmung und dem Gehäuse (102, 202, 302, 402) um das Scharnier (164, 364) schwenken kann; oder
wobei die Säge (100, 200, 300, 400) ferner einen Tank (195, 295, 395, 495) beinhaltet, der an der Montageplatte (116, 216, 316, 416) montiert ist, wobei der Tank (195, 295, 395, 495) einen (197, 397, 497) zum Aufnehmen eines Fluids und einen Tankauslass (199), durch den das Fluid strömen kann;
eine Pumpe (1-101) mit einem Pumpeneinlass, der fluidisch an den Tankauslass (199) gekoppelt ist, und einem Pumpenauslass zum Pumpen des Fluids aus dem Tank (195, 295, 395, 495);
ein Ventil (1-103) mit einem Ventileinlass, der fluidisch an den Pumpenauslass gekoppelt ist, und einem Ventilauslass, wobei das Ventil (1-103) eine Strömungsrate des Fluids von der Pumpe (1-101) einstellen kann; und
eine Auslassdüse (1-105), die mit dem Ventilauslass fluidisch gekoppelt ist, wobei die Auslassdüse (1-105) an einer Position benachbart zu der Abschirmung (110, 210, 310, 410) angeordnet ist, um das Fluid zu der Sägeklinge zuzuführen (108, 208, 408).

## Revendications

1. Une scie (100, 200, 300, 400) pour couper un matériau dur, la scie (100, 200, 300, 400) comprenant:
un boîtier (102, 202, 302, 402) ayant une première paroi latérale (118, 218, 418) et une seconde paroi(120, 220);
un moteur (104, 204) monté sur la première paroi latérale du boîtier (102, 202, 302, 402),où le moteur (104, 204) comprend un arbre d'entraînement;
un arbre (206) monté sur la deuxième paroi latérale du boîtier (102, 202, 302, 402), dans lequel le mandrin (206) comprend une première extrémité (234) et une seconde extrémité opposée à la première extrémité (234), dans lequel la première extrémité (234) peut recevoir une lame de scie (108, 208, 408) ayant un bord circonférentielle, dans lequel l'arbre d'entraînement du moteur (104, 204) fait tourner la seconde extrémité de l'arbre(206) pour faire tourner le tranchant circonférentiel (138, 238) de la lame de scie (108, 208, 408), **caractérisé en ce que** le mandrin (206) est dans une position fixe par rapport au boîtier (102, 202, 302, 402) de la scie (100, 200, 300, 400);
un bouclier (110, 210, 310, 410) monté sur le boîtier (102, 202, 302, 402), le bouclier (110, 210, 310, 410) ayant une paroi supérieure qui recouvre au moins une partie de la première extrémité (243) du arbre (206), la paroi supérieure ayant un premier espace de surface majeure directement en face de la première extrémité(234) de l'arbre (206) de manière à recevoir la lame de scie (108, 208, 408) et une deuxième grande surface opposée à la première surface principale, la deuxième surface principale ayant une marque allongée qui s'aligne avec le tranchant circonférentiel (138, 238) de la lame de scie (108, 208, 408) lorsqu'elle est montée sur la première extrémité (234) de l'arbre (206);
un guide de profondeur de coupe (112, 212, 312, 412) sur le boîtier (102, 202, 302, 402), le guide de profondeur de coupe (112, 212, 312, 412) ayant un poteau de profondeur (176, 276, 376, 476), un manchon (178, 378, 478) pour recevoir le poteau de profondeur (176, 276, 376, 476) et un loquet (180, 380, 480) monté sur le manchon (178, 378, 478), dans lequel:
le manchon (178, 378, 478) comprend une surface intérieure (282, 482) qui définit une ouverture (284, 384, 484) qui entoure au moins partiellement le poteau de profondeur (176, 276, 376, 476) et à travers laquelle le poteau de profondeur (176, 276, 376, 476) peut se déplacer par rapport au manchon (178, 378, 478);
le poteau de profondeur (176, 276, 376, 476) a une première extrémité (186, 286, 486), une deuxième extrémité (188, 288, 388, 488) opposée à la première extrémité (186, 286, 486) le long d'un axe longitudinal (190, 290, 390, 490), et a deux ou plus d'une surface qui sont chacune espacée à
un intervalle prédéterminé l'une de l'autre le long de l'axe longitudinal (190,290, 390, 490) ; et
le loquet (180, 380, 480) comporte une première partie (417) qui coopère de manière amovible
la surface (403) du poteau de profondeur (476) pour fixer la position du poteau de profondeur (476)
par rapport au manchon (178, 378, 478);
une roue de guidage (114, 214, 414) se prolongeant à partir de la première extrémité (186, 286, 486) du poteaude profondeur (176, 276, 376, 476), la roue de guidage (114, 214, 414) ayant une surface périphérique (105, 205, 405) qui peut entrer en contact avec la surface dure; et
une plaque de montage (116, 216, 316, 416) ayant une première surface principale (259, 359, 459) et une deuxième grande surface (161) opposée à la première grande surface (259, 359, 459), la première surface principale (259, 359, 459) a un taquet pour relier de manière amovible la scie (100, 200, 300, 400) à une machine (122, 222, 422) qui fournit la puissance pour faire fonctionner le moteur (104, 204) de la scie (100, 200, 300, 400), dans lequel la première paroi latérale (118, 218, 418) et la deuxième paroi latérale (120, 220) de boîtier (102, 202, 302, 402) sont couplés à la deuxième grande surface (161) et s'étendent dans une direction commune à l'écart de la première surface principale (259, 359, 459) et de la deuxième surface principale (161) de la plaque de montage (116, 216, 316, 416), dans lequel la scie (100, 200, 300, 400) est configurée de telle sorte que l'alignement de la lame de scie de coupe circonférentielle (138, 238) de la lame de scie (108, 208, 408) ne changera pas par rapport à la première surface principale (259, 359, 459) et la deuxième surface principale (161) de la plaque de montage (116, 216, 316, 416), et dans laquelle la plaque de montage (116, 216, 316, 416) peut transférer la pression de la machine (122, 222, 422) à la roue de guidage (114, 214, 414) se prolongeant à partir de la première extrémité (234) du poteau de profondeur pour maintenir une profondeur de coupe de la lame de scie (108, 208, 408) déterminée par la position du poteau de profondeur (176, 276, 376, 476) par rapport au manchon (178, 378, 478).

2. La scie (100, 200, 300, 400) selon la revendication 1, dans laquelle l'arbre (206) comprend un axe (190, 290, 390, 490) s'étendant entre la première extrémité (234) et la seconde extrémité (236) de arbre (206), dans lequel l'axe longitudinal (190, 290, 390, 490) ne peut pas se déplacer par rapport au boîtier (102, 202, 302, 402) de la scie (100, 200, 300, 400).

3. La scie (100, 200, 300, 400) de la revendication 1, dans laquelle la scie comprend seulement un moteur hydraulique, dans lequel le moteur (104, 204) monté sur la première paroi latérale (118, 218, 418) du le boîtier (102, 202, 302, 402) est le moteur hydraulique entraîné par la puissance fournie par un auxiliaire d'alimentation hydraulique auxiliaire de la machine (122, 222, 422).

4. La scie selon la revendication 3, dans laquelle toute la puissance fournie par l'alimentation hydraulique auxiliaire de la machine (122, 222, 422) est utilisée pour faire fonctionner le moteur hydraulique ; ou
dans lequel la scie comprend un clapet anti-retour en ligne couplé hydrauliquement au moteur hydraulique.

5. La scie selon l'une quelconque des revendications 1 à 4, dans laquelle un joint universel relie la deuxième extrémité (236) du mandrin (206) à l'arbre d'entraînement du moteur (104, 204).

6. La scie selon la revendication 5, dans laquelle le joint universel est un coupleur de type mâchoire qui relie la seconde extrémité (236) du mandrin (206) à l'arbre d'entraînement du moteur (104, 204).

7. La scie selon l'une quelconque des revendications 1 à 6, dans laquelle un ou plusieurs supports de palier (246) fixent le porte-outil (206) au carter (102, 202, 302, 402); ou
dans lequel le boîtier (102, 202, 302, 402) comprend en outre une paroi supérieure (192, 392, 492) reliée à la première paroi latérale (118, 218, 418) et à la seconde paroi latérale (120, 220), la paroi supérieure (192, 392, 492) ayant:
une première surface principale (194, 394, 494) et une seconde surface principale (298) opposée à la première surface principale (194, 394, 494); et
une surface se prolongeant entre la première surface principale (194, 394, 494) et la la deuxième surface principale (298) pour définir une ouverture (284, 384, 484);
dans lequel le manchon (178, 378, 478) du guide de profondeur de coupe (112, 212, 312, 412) s'étend dans une direction commune à l'opposé de la première surface principale (194, 394, 494) et de la seconde surface principale surface (296) de la paroi supérieure (192, 392, 492) et dans laquelle l'ouverture (201) à travers la paroi supérieure (192, 292, 492) est alignée avec l'ouverture (201) dans le manchon (178, 378, 478) du guide de profondeur de coupe (112, 212, 312, 412) pour permettre au poteau de profondeur (176, 276, 376, 476) de se déplacer à travers les ouvertures (284, 384, 484, 201) par rapport au manchon (178, 378, 478).

8. La scie (100, 200, 300, 400) selon l'une quelconque des revendications 1 à 7, dans laquelle le loquet (180, 380, 480) comprend une goupille (419) ayant une première extrémité (421) et une seconde extrémité (423) espacée longitudinalement de la première extrémité (421), le goupille définissant la première partie (417) du loquet (180, 380, 480) qui engage de manière amovible la surface (403) du poteau de profondeur (476); et
dans lequel le manchon (178, 378, 478) du guide de profondeur de coupe (112, 212, 312, 412) comprend un première paroi de guidage de goupille (425) ayant une première surface (427) définissant une première ouverture (429) vers la surface intérieure (484) du manchon (178, 378, 478) et une deuxième paroi de guidage de goupille (431) ayant une deuxième surface (433) définissant une deuxième ouverture (435) vers la surface interne (484) du manchon (178, 378, 478), dans laquelle la première ouverture (429) et la deuxième ouverture (435) vers la surface intérieure (484) du manchon (178, 378, 478) sont alignées concentriquement et dans lequel le premier mur de guidage de broche (425) et le second mur de guidage de goupille (431) reçoivent de manière amovible au moins la première partie (417) définie par la goupille (419).

9. La scie (100, 200, 300, 400) de la revendication 8, dans laquelle le poteau de profondeur (176, 276, 376, 476, 474) est un tube (107, 207, 307, 407) ayant une forme en coupe transversale carrée qui comprend un premier mur (109, 209, 309, 409) et une seconde paroi (111, 211, 311, 411) opposée à la première paroi (109, 209, 309, 409), dans laquelle le premier mur (109, 209, 309, 409) comprend deux ou plus des surfaces (403) pour définir une première série de trous (413) espacés à l'intervalle prédéterminé les uns des autres le long de l'axe longitudinal (490) et la deuxième paroi (111, 211, 311, 411) comprend deux ou plus des surfaces (403) pour définir une seconde série de trous (415) espacés à l'intervalle prédéterminé l'autre le long de l'axe longitudinal (490) et dans lequel la première série de trous (413) et la deuxième série de trous (415) forment des paires de trous alignés concentriquement qui peuvent recevoir la goupille (419).

10. La scie (100, 200, 300, 400) selon l'une quelconque des revendications 8-9, dans laquelle le loquet (180, 380, 480) comprend en outre un joug (137, 337, 437) ayant:
une paroi de verrou avant (139, 339, 439) avec une première surface principale (445) et une seconde surface principale (447) opposée à la première surface principale (445) ;
une première paroi latérale (141, 341, 441) et une seconde paroi latérale (143, 343, 443) opposée la première paroi latérale (143, 343, 443), la paroi avant (139, 339, 439) joignant la première paroi latérale (141, 341, 441) et la deuxième paroi latérale (143, 343, 443) et dans laquelle à la fois la première paroi latérale (141, 341, 441) et la deuxième paroi latérale (143, 343, 443) s'étendent dans un direction commune à partir du manchon (178, 378, 478) du guide de profondeur de coupe (112, 212, 312, 412), la paroi de verrouillage avant (139, 339, 439) comprenant en outre une surface (449) s'étendant entre la première grande surface (445) et la deuxième grande surface (447) pour définir une ouverture (451) qui s'aligne concentriquement avec la première ouverture (429) du premier guide de goupille (425) et la deuxième ouverture (435) du deuxième mur de guidage de goupille (431), dans lequel la goupille (419) s'étend à travers l'ouverture (435) dans la paroi de verrouillage avant (139, 339, 439), la première ouverture (429) dans le premier mur de guidage de goupille (425) et au moins partiellement à travers la deuxième ouverture (435) dans le deuxième mur de guidage de goupille (431) pour positionner la première extrémité (421) de la goupille (419) distale par rapport à l'ouverture (451) dans la paroi de verrouillage avant (139, 339, 439) et première ouverture (429) dans le premier mur de guidage de goupille (425) ;
une poignée (153, 353, 453) attachée à la goupille (419), la poignée (153, 353, 453) positionné à proximité de la première grande surface (445) de la paroi de verrouillage avant (139, 339,439) ; et
un ressort (455) positionné entre la deuxième surface de la paroi de verrouillage avant (139, 339, 439) et le premier mur de guidage de goupille (425), dans lequel une première partie (417) du ressort (455) est reliée à la goupille (419) de telle sorte qu'une force appliquée à la poignée pour déplacer la première extrémité (421) de la goupille (419) plus loin à la fois de la première surface principale (445) et de la deuxième grande surface (447) de la paroi de verrouillage avant (139, 339, 439) comprime le ressort(455).

11. La scie (100, 200, 300, 400) selon l'une quelconque des revendications 1 à 10, dans laquelle le boîtier (102, 202,302, 402) comprend en outre une paroi de boîtier avant (165, 465) s'étendant entre la première paroi latérale (118, 218, 418) et la deuxième paroi latérale (120, 220) du boîtier (102, 202, 302, 402), dans lequel le boîtier avant définit une douille (267) pour recevoir la roue de guidage (114, 214, 314, 414).

12. La scie (100, 200, 300, 400) de la revendication 11, dans laquelle les deux ou plus de la surface (403) du poteau de profondeur (476) comprend une surface terminale (469) pour recevoir la première partie (417) du loquet (180, 380, 480) pour fixer la roue de guidage (114, 214, 314, 414) au moins partiellement à l'intérieur du boîtier (102, 202, 302, 402) de sorte que seule une partie de la surface périphérique (105, 205, 405) qui entre en contact avec le matériau dur lorsque la plaque de montage transfère la pression de la machine à la roue de guidage (114) s'étend de la douille (267) pour placer la lame de scie (108, 208, 408) à une position de coupe en profondeur pour la scie (100, 200, 300, 400) ;
ou dans lequel la paroi avant du boîtier (165, 465) comprend une première grande surface plane (171) et une seconde grande surface plane (273) opposée à la première grande surface plane (171), dans laquelle la la première grande surface plane (171) et la deuxième grande surface plane (273) sont approximativement perpendiculaires à une surface planaire du matériau dur qui est coupé par la scie (100, 200, 300, 400) lorsque la lame de scie (108, 208, 408) est en position de coupe à pleine profondeur; ou
où la première paroi latérale (118, 218, 418) et la deuxième paroi latérale (120, 220) du boîtier (102, 202, 302, 402) ont chacune la forme d'un polygone convexe ayant cinq bords droits périphériques qui définissent cinq coins, dans lequel:
un premier bord (475) est parallèle à la fois à la première surface principale (259, 359, 459) et à la deuxième grande surface (161) de la plaque de montage (116, 216, 316, 416);
un deuxième bord (477) s'étend à partir de la première surface principale (259, 359, 459) et la deuxième surface principale (16161) de la plaque de montage (116, 216, 316, 416) pour former un premier coin (479) ayant un angle intérieur d'environ 83 degrés avec le premier bord (475);
un troisième bord (481) s'étend à la fois de la première grande surface (259, 359, 459) et la deuxième grande surface (161) de la plaque de montage (116, 216, 316, 416) pour former un deuxième coin (483) ayant un angle intérieur d'environ 81 degrés avec le premier bord (475);
un quatrième bord (475) s'étend à partir du troisième bord (481) pour former un troisième coin (487) ayant un angle intérieur d'environ 172 degrés avec le troisième bord (481); et un cinquième bord (489) se prolonge à partir du quatrième bord (485) pour former un quatrième coin (491) ayant un angle intérieur d'environ 90 degrés avec le quatrième bord (485), et se prolonge à partir troisième bord (481) pour former un cinquième coin (493) ayant un angle intérieur d'environ 114 degrés avec le troisième bord (481).

13. La scie (100, 200, 300, 400) selon la revendication 12, dans laquelle lorsque la lame de scie (108, 208, 408) est à la position de coupe à pleine profondeur, le quatrième bord (485) de chacune des première paroi latérale (118, 218, 418) et de la deuxième paroi latérale (120, 220) du boîtier (102, 202, 302, 402) est approximativement parallèle à la surface plane du matériau dur.

14. La scie (100, 200, 300, 400) selon l'une quelconque des revendications 11 à 13, dans laquelle seule une partie du bouclier (110, 210, 310, 410) monté sur le boîtier (102, 202, 302, 402) s'étend distalement à partir de la première surface plane principale (171) et de la seconde surface plane principale (273) du de logement avant (165, 465).

15. La scie (100, 200, 300, 400) selon l'une quelconque des revendications 1 à 14, dans laquelle le bouclier (110, 210, 310, 410) comprend une première partie (160, 260, 360, 460) et une seconde partie (162, 262, 462) reliées à la première partie (160, 260, 360, 460) avec une charnière, dans laquelle la première partie (160, 260, 360, 460) du bouclier (110, 210, 310, 410) est monté sur le boîtier (102, 202, 302, 402) et deuxième partie (162, 262, 462) du bouclier (110, 210, 310, 410) peut pivoter par rapport à la première partie (160, 260, 360, 460) du carter et le boîtier (102, 202, 302, 402) autour de la charnière (164, 364); ou
dans lequel la scie (100, 200, 300, 400) comprend également un réservoir (195, 295, 395, 495) monté sur la plaque de montage (116, 216, 316, 416), le réservoir (195, 295, 395, 495) ayant une entrée de réservoir (197, 397, 497) pour recevoir un fluide et une sortie de réservoir (199) à travers laquelle le fluide peut s'écouler;
une pompe (1-101) ayant une entrée de pompe couplée fluidiquement à la sortie du réservoir (199) et une sortie de pompe pour pomper le fluide à partir du réservoir (195, 295, 395, 495);
une soupape (1-103) ayant une entrée de soupape couplée fluidiquement à la sortie de la pompe et une sortie de soupape, dans lequel la valeur (1-103) peut ajuster un débit du fluide provenant de la pompe (1-101); et
une buse de sortie (1-105) couplée de manière fluide à la sortie de la soupape, dans laquelle la buse de sortie (1-105) est située à une position adjacente au bouclier (110, 210, 310, 410) pour fournir le fluide à la lame de scie lame de scie (108, 208, 408) .
